(19) Europäisches Patentamt / European Patent Office / Office européen des brevets

(11) **EP 2 055 536 A1**

(12) **EUROPEAN PATENT APPLICATION**
published in accordance with Art. 153(4) EPC

(43) Date of publication:
**06.05.2009 Bulletin 2009/19**

(51) Int Cl.:
**B60R 21/00** *(2006.01)* **B62D 1/04** *(2006.01)*
**G08G 1/16** *(2006.01)*

(21) Application number: **07832690.7**

(22) Date of filing: **28.11.2007**

(86) International application number:
**PCT/JP2007/072968**

(87) International publication number:
**WO 2008/072473 (19.06.2008 Gazette 2008/25)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **12.12.2006 JP 2006334942**

(71) Applicant: **Toyota Jidosha Kabushiki Kaisha Toyota-shi, Aichi 471-8571 (JP)**

(72) Inventors:
• **IWAKIRI, Hideyuki**
  **Toyota-shi**
  **Aichi 471-8571 (JP)**
• **MAKINO, Yasushi**
  **Toyota-shi**
  **Aichi 471-8571 (JP)**
• **ENDO, Tomohiko**
  **Toyota-shi**
  **Aichi 471-8571 (JP)**

• **KAWABATA, Yukiko**
  **Toyota-shi**
  **Aichi 471-8571 (JP)**
• **OMORI, Miyuki**
  **Toyota-shi**
  **Aichi 471-8571 (JP)**
• **NITTA, Takashi**
  **Toyota-shi**
  **Aichi 471-8571 (JP)**
• **SUZUKI, Daisuke**
  **Toyota-shi**
  **Aichi 471-8571 (JP)**
• **KUBOTA, Yuichi**
  **Toyota-shi**
  **Aichi 471-8571 (JP)**

(74) Representative: **Intes, Didier Gérard André et al Cabinet Beau de Loménie 158, rue de l'Université 75340 Paris Cedex 07 (FR)**

(54) **PARKING SUPPORT DEVICE**

(57) The present invention provides a parking assist device (10A, 10B) for assisting a driver to parallel-park an own vehicle in a parking space adjacent to a parked vehicle. The parking assist device includes an inclination angle calculation unit (46A, 46B) configured to calculate an inclination angle θ of a moving direction of the own vehicle with respect to a side of the parked vehicle; and a steering assist unit (42A, 42B) configured to perform steering assistance such that the inclination angle θ calculated by the inclination angle calculation unit (46A, 46B) becomes zero.

FIG.7

## Description

### Technical Field

The present invention generally relates to a parking assist device for assisting a driver to parallel-park a vehicle in a parking space adjacent to a parked vehicle.

### Background Art

Patent document 1 discloses a parking assist device including a first distance sensor for measuring a distance between a vehicle and an obstacle located to the side of the vehicle; a second distance sensor for measuring a moving distance of the vehicle; a yaw angle detecting unit for detecting a yaw angle of the vehicle; a guidance unit for outputting guidance for a driver on vehicle operations; and a controller for determining an initial stop position based on the distance to the obstacle measured by the first distance sensor and the moving distance measured by the second distance sensor and informing the driver via the guidance unit of an optimal timing to temporarily stop the vehicle during reverse parking based on the initial stop position and the yaw angle detected by the yaw angle detecting unit.
[Patent document 1] Japanese Patent Application Publication No. 2003-81042

### Disclosure of Invention

### Problems to be Solved by the Invention

In parallel parking assistance where a vehicle is guided from a parking start position to a target parking space, orienting the vehicle in the parking start position parallel to a parked vehicle makes it easier to accurately determine the initial orientation of a target parking frame to be displayed.
Although the parking assist device disclosed in patent document 1 guides a vehicle to an appropriate initial stop position (or parking start position), the device is not able to determine the orientation of the vehicle in the parking start position and therefore is not able to easily and accurately determine the initial orientation of a target parking frame to be displayed.
An embodiment of the present invention provides a parking assist device including a steering assist unit for assisting a driver to place a vehicle in a parking start position parallel to a parked vehicle.

### Means for Solving the Problems

A first aspect of the present invention provides a parking assist device for assisting a driver to parallel-park of own vehicle in a parking space adjacent to a parked vehicle. The parking assist device includes an inclination angle calculation unit configured to calculate an inclination angle of a moving direction of the own vehicle with respect to a side of the parked vehicle; and a steering assist unit configured to perform steering assistance such that the inclination angle calculated by the inclination angle calculation unit becomes zero.
According to a second aspect of the present invention, the inclination angle calculation unit of the first aspect is configured to calculate the inclination angle with respect to the parked vehicle that is located behind the parking space in the moving direction of the own vehicle.
According to a third aspect of the present invention, if a parking lot line or a road dividing line near the parking space is detected by image recognition, the inclination angle calculation unit of the first or second aspect is configured to calculate the inclination angle of the moving direction of the own vehicle with respect to the orientation of the parking lot line or the road dividing line.
According to a fourth aspect of the present invention, if neither the parking lot line nor the road dividing line near the parking space is detected by image recognition, the inclination angle calculation unit of the third aspect is configured to calculate the inclination angle based on an output from a distance-measuring sensor for detecting a distance between the side of the parked vehicle and the own vehicle.
According to a fifth aspect of the present invention, the parking assist device of the first aspect further includes a deflection angle calculation unit configured to calculate an amount of change in the orientation of the own vehicle; wherein the steering assist unit is configured to total deflection angles that are calculated by the deflection angle calculation unit after the inclination angle is calculated by the inclination angle calculation unit and to perform the steering assistance such that the sum of the totaled deflection angles and the inclination angle becomes substantially zero.
According to a sixth aspect of the present invention, the deflection angle calculation unit of the fifth aspect is configured to calculate the amount of change in the orientation of the own vehicle in a specified section based on output signals from a steering angle sensor and a speed sensor.

According to a seventh aspect of the present invention, the parking assist device of the first aspect further includes a display unit configured to display a video image of a road surface behind the own vehicle; wherein the steering assist unit is configured to superimpose a reference line extending parallel to a straight line approximating the side of the parked vehicle and a line indicating a current orientation of the own vehicle on the video image to perform the steering assistance.

According to an eighth aspect of the present invention, the inclination angle calculation unit of the first aspect is configured to calculate the inclination angle based on a result of detecting the side of the parked vehicle from the rear end to the front end by a distance-measuring sensor.

## Advantageous Effect of the Invention

An embodiment of the present invention provides a parking assist device including a steering assist unit for assisting a driver to place a vehicle in a parking start position parallel to a parked vehicle.

## Brief Description of the Drawings

FIG. 1 is a block diagram illustrating a configuration of a parking assist device 10A according to a first embodiment of the present invention;

FIG. 2 is a drawing illustrating how a distance-measuring sensor 70 detects a parked vehicle Z;

FIG. 3 is a drawing showing a sequence of points obtained by the distance-measuring sensor 70 installed in a vehicle (own vehicle) moving by the parked vehicle Z at an angle;

FIG. 4 is a block diagram illustrating a functional configuration of a parking assist ECU 12A;

FIG. 5 is a drawing illustrating a parallel parking space;

FIG. 6 is a flowchart showing exemplary steering assist control performed by the parking assist ECU 12A;

FIG. 7 is a drawing illustrating the steering assist control shown in FIG. 6;

FIG. 8 is a drawing illustrating a more user-friendly example of parallel guidance;

FIG. 9 is a drawing illustrating an exemplary touch panel on a display 22 for setting a target parking position;

FIG. 10 is a block diagram illustrating a configuration of a parking assist device 10B according to a second embodiment of the present invention; and

FIG. 11 is a flowchart showing an exemplary inclination calculation process performed by an inclination calculation unit 46B according to the second embodiment.

## Explanation of References

| 10A, 10B | Parking assist device |
|---|---|
| 12A, 12B | Parking assist ECU |
| 16 | Steering angle sensor |
| 18 | Speed sensor |
| 20 | Back monitor camera |
| 22 | Display |
| 30 | Steering control ECU |
| 41 | Parking space detecting unit |
| 42A, 42B | Information output control unit |
| 43 | Deflection angle calculation unit |
| 44 | Parking start position calculation unit |
| 46A, 46B | Inclination calculation unit |
| 48 | Target movement path calculation unit |
| 50 | Reverse shift switch |
| 52 | Parking switch |
| 70 | Distance-measuring sensor |

## Best Mode for Carrying Out the Invention

Preferred embodiments of the present invention are described below with reference to the accompanying drawings.

<FIRST EMBODIMENT>

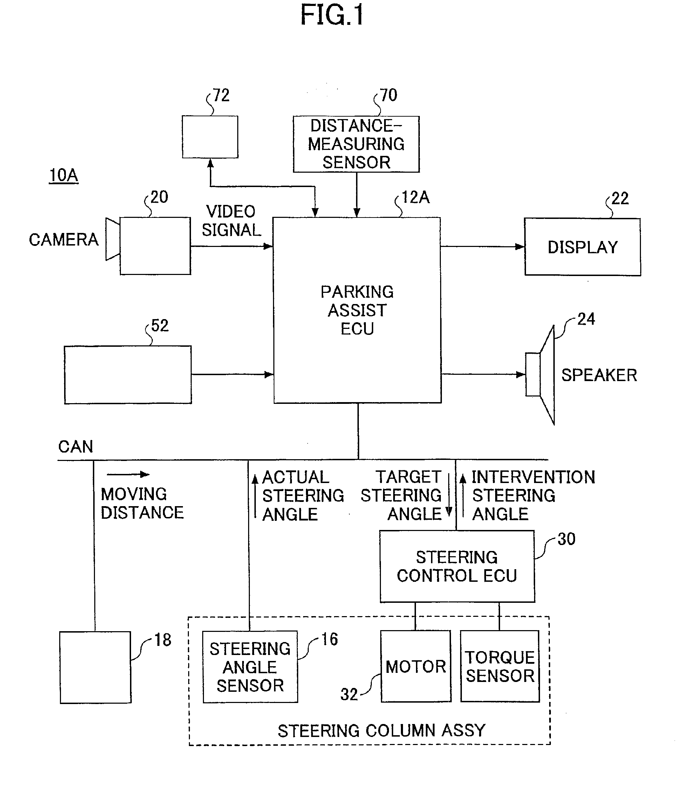

FIG. 1 is a block diagram illustrating a configuration of a parking assist device 10A according to a first embodiment of the present invention. As shown in FIG. 1, the parking assist device 10A includes a parking assist electronic control unit (ECU) 12A. The parking assist ECU 12A is implemented by a microcomputer including a CPU, a ROM, and a RAM that are connected to each other via a bus (not shown). The ROM stores data and programs to be executed by the CPU.

The parking assist ECU 12A is connected, for example, via a controller area network (CAN) or a highspeed communication bus to a steering angle sensor 16 for detecting a steering angle of a steering wheel (not shown) and a speed sensor 18 for detecting the speed of a vehicle. The speed sensor 18 may be implemented by a set of wheel speed sensors each of which is disposed near the corresponding wheel and generates a pulse signal at a frequency corresponding to the speed of the wheel.

The parking assist ECU 12A is also connected to distance-measuring sensors 70 for detecting a distance between a vehicle and a parked vehicle using, for example, a sound wave (e.g., ultrasonic wave), a radio wave (e.g., millimeter wave), or a light wave (e.g., laser beam). Each of the distance-measuring sensors 70 may be implemented by any device, such as a laser radar, a millimeter wave radar, an ultrasonic wave radar, or a stereoscopic device, that can detect a distance. The distance-measuring sensors 70 are disposed, respectively, at the front-left and front-right sides of a vehicle.

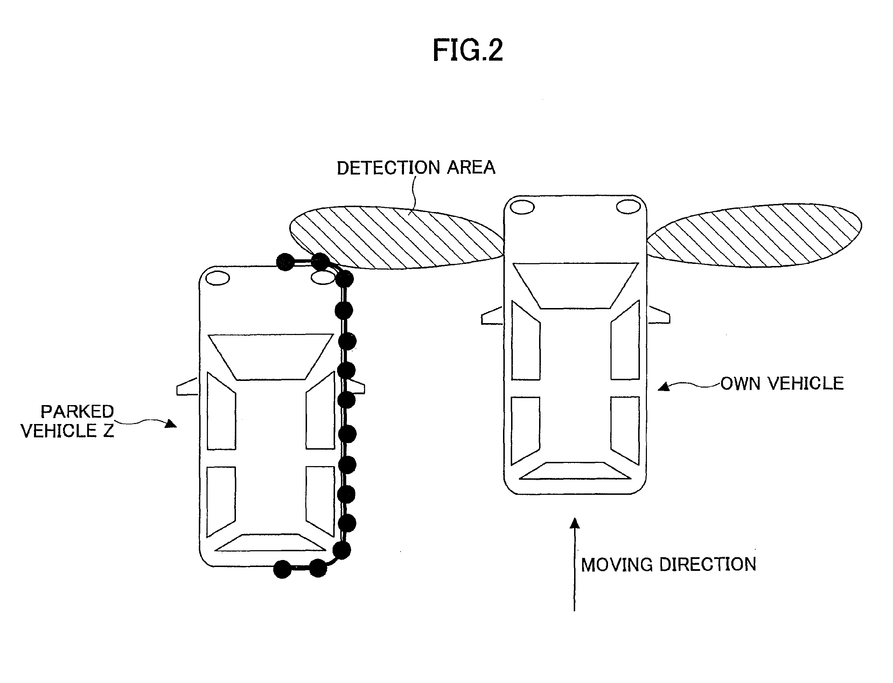

As shown in FIG. 2, each of the distance-measuring sensors 70 detects a distance between a vehicle and a parked vehicle located to the side of the vehicle by emitting, for example, sound waves sideward and receiving reflected waves from the parked vehicle. For example, the distance-measuring sensors 70 are mounted near a front bumper of a vehicle and emit sound waves diagonally forward at an angle between 17 and 20 degrees with respect to the width direction of the vehicle.

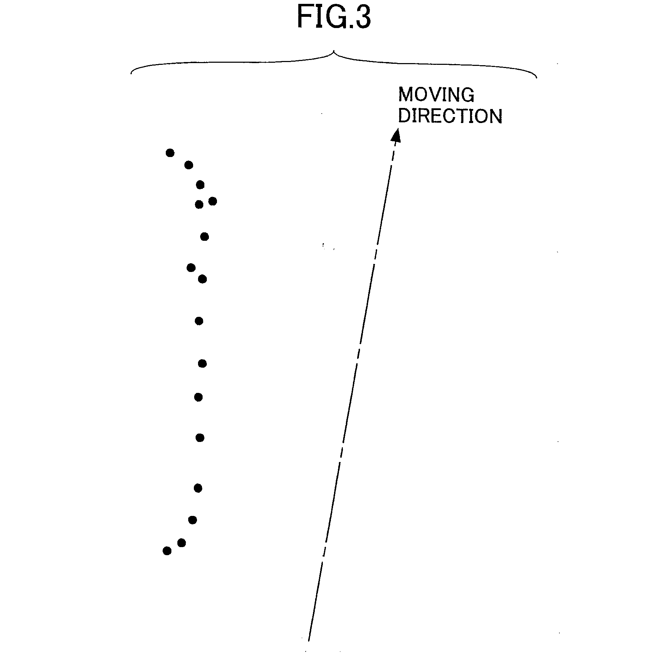

FIG. 3 is a drawing showing a sequence of points obtained by the distance-measuring sensor 70 installed in a vehicle (own vehicle) moving by a parked vehicle Z at an angle. As shown in FIG. 3, the distance-measuring sensor 70 outputs a sequence of points corresponding to reflecting points (points reflecting, for example, sound waves) on a parked vehicle. The output data are stored at each output cycle in a memory 72 (e.g., EEPROM).

The parking assist ECU 12A is further connected to a reverse shift switch 50 and a parking switch 52. The reverse shift switch 50 outputs an ON signal when a shift lever is placed in the reverse position and outputs an OFF signal when the shift lever is in other positions. The parking switch 52 is provided in the cabin of a vehicle and is operable by the user. The parking switch 52 is normally turned off and is turned on by the user.

The parking assist ECU 12A determines whether the user needs parking assistance based on an output signal from the parking switch 52. As soon as the parking switch 52 is turned on while the vehicle is moving, the parking assist ECU 12A starts parking assist control to guide the vehicle to a target parking position in a parking space. The parking assist control not only includes vehicle control such as steering control to move the vehicle to a target parking position, but also includes output of information for a driver such as a guidance message for guiding the vehicle to a parking start position and steering assistance to correctly orient the vehicle in the parking start position.

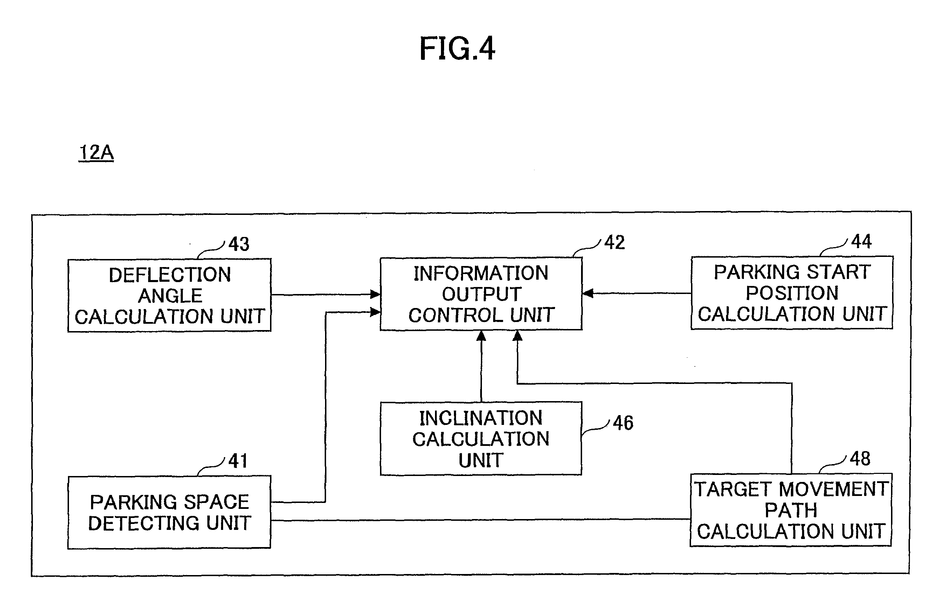

FIG. 4 is a block diagram illustrating a functional configuration of the parking assist ECU 12A. The parking assist ECU 12A includes a parking space detecting unit 41, an information output control unit 42A, a deflection angle calculation unit 43, a parking start position calculation unit 44, an inclination calculation unit 46A, and a target movement path calculating unit 48. Configurations and functions of these units are described below.

The parking space detecting unit 41 detects a parking space located to the side of a vehicle based on a detection result (a sequence of points) from the distance-measuring sensor 70. The parking space detecting unit 41 tries to detect a parking space that may exist to the right or left of a vehicle based on a detection result (a sequence of points) from the distance-measuring sensor 70. The parking space detecting unit 41 examines the right and left sides separately and simultaneously. Because detection methods for the right side and the left side are substantially the same, a detection method described below applies to either one of the sides unless otherwise stated. Meanwhile, detection methods for garage parking and parallel parking are different. Below, a method of detecting a parking space for parallel parking is described. The parking switch 52 may be configured to allow the driver to select garage parking or parallel parking. In such a case, the parking assist ECU 12A operates in a selected parking mode (garage parking mode or parallel parking mode).

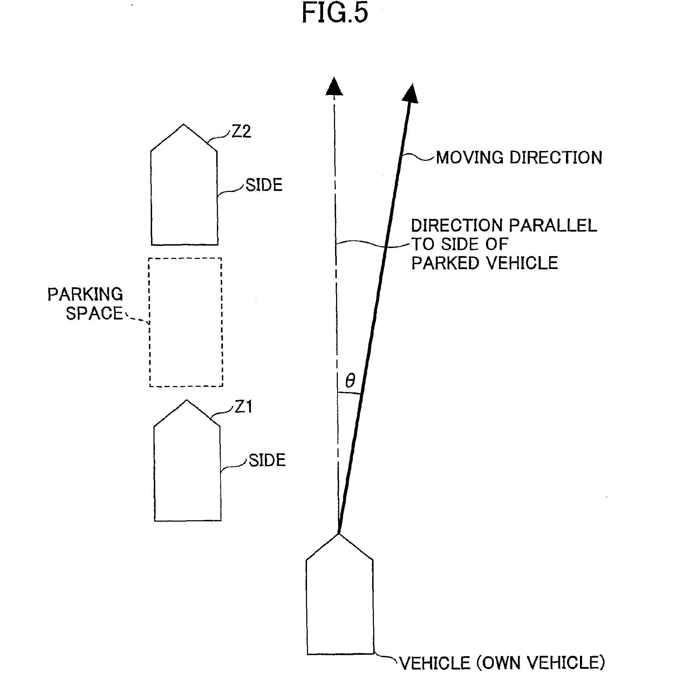

FIG. 5 is a drawing illustrating a parallel parking space. In FIG. 5, there is a parking space (indicated by a dotted rectangle) to the side of a vehicle, and vehicles Z1 and Z2 are parked adjacent to the parking space. Here, it is assumed that the vehicle (own vehicle) moves by the parked vehicles Z1 and Z2 (and the parking space adjacent to them) in a direction indicated by an arrow in FIG. 5.

In parallel parking, the parking space detecting unit 41 detects a parking space in two steps based on the detection result (a sequence of points indicating distances from a side of a parked vehicle) from the distance-measuring sensor 70.

For example, the parking space detecting unit 41 sets a temporary flag when the length of the sequence of points exceeds 2.0 m. If no point is detected for more than 50 cm after the sequence of points exceeds a predetermined length (> 2.0 m), the parking space detecting unit 41 sets a completion flag.

After setting the completion flag, if no point is detected for another predetermined length (e.g., L2: 0.5 m), the parking space detecting unit 41 determines that there is a parking space to the side of the vehicle and sets a parking space detection flag. Thus, in this embodiment, if no point is detected for more than the length L2 after the sequence of points exceeds a predetermined length (> 2.0 m), the parking space detecting unit 41 determines that there is a parking space in front of a parked vehicle corresponding to the completion flag and sets the parking space detection flag.

When the parking space detection flag is set, the information output control unit 42A informs the driver that there is a parking space to the side of the vehicle. This function enables the driver to detect an available parking space to the side of the vehicle without searching for the parking space with one's own eyes. Also, when the parking space detection flag is set, the information output control unit 42A performs steering assistance described below.

The deflection angle calculation unit 43 calculates the amount of change in the orientation of the vehicle (hereafter called a deflection angle $\alpha$) in a specified section based on output signals from the steering sensor 16 and the speed sensor 18 (see FIG. 1). The specified section is, for example, between the current position and a previous position of the vehicle which previous position is at a distance (e.g., 7 m) behind the current position. The deflection angle $\alpha$ increases clockwise and decreases counterclockwise. The deflection angle $\alpha$ can be normally obtained by a formula 1 where "ds" indicates a minute moving distance of a vehicle and "$\gamma$" indicates road curvature (corresponding to an inverse number of a turning radius R of the vehicle). The formula 1 calculates the deflection angle $\alpha$ indicating the amount of change in the orientation of a vehicle in a section between the current position and a previous position of the vehicle which previous position is $\beta$ m (here, $\beta = 7$) behind the current position.

$$[\text{Formula 1}]$$

$$\alpha = \int_{-\beta}^{0} \gamma \cdot ds$$

The deflection angle calculation unit 43 calculates a minute deflection angle $\alpha_i$ for each predetermined moving distance (here, 0.5 m) using a formula 2 below obtained by transforming the formula 1, and calculates the deflection angle $\alpha$ by totaling the obtained minute deflection angles $\alpha_1$ through $\alpha_k$.

$$[\text{Formula 2}]$$

$$\alpha = \sum_{i=1}^{k} \alpha_i \quad , \quad \alpha_i = \int_{-0.5}^{0} \gamma \cdot ds$$

The predetermined moving distance (e.g., 0.5 m) is detected by time-integrating the output signal (wheel speed pulses) from the speed sensor 18. The road curvature $\gamma$ is calculated based on a steering angle Ha obtained by the steering angle sensor 16 using, for example, a formula $\gamma = \text{Ha}/\text{L}\cdot\eta$ (L indicates a wheelbase length and $\eta$ indicates an overall gear ratio (the ratio of the steering angle Ha to a turning angle of a wheel) of the vehicle). The minute deflection angle $\alpha_i$ may instead be calculated by multiplying the road curvature $\gamma$ obtained for each minute moving distance of 0.01 m by the minute moving distance of 0.01 m, and by totaling the multiplication results for a moving distance of 0.5 m. The relationships between the road curvature $\gamma$ and the steering angles Ha may be stored in the ROM of the parking assist ECU 12A as a map prepared based on correlation data obtained for each vehicle.

The deflection angle $\alpha$ calculated as described above is used by the information output control unit 42A to determine a driving pattern (history of changes in the position and orientation) of the vehicle to perform steering assistance as described below.

The parking start position calculation unit 44 calculates a parking start position from which parking assistance to guide the vehicle to the detected parking space can be started (i.e., a parking start position from which a path to a target parking position in the parking space can be generated). The parking start position from which parking assistance can be started may be defined as a range of points rather than a single point. In this case, the parking start position calculation unit 44 may be configured to calculate a range of candidate positions for the parking start position.

The inclination calculation unit 46A calculates an inclination angle $\theta$ (see FIG. 5) between a side of a parked vehicle and a moving direction of the own vehicle based on the detection result (a sequence of points indicating distances from the side of the parked vehicle) from the distance-measuring sensor 70. The inclination angle 8 is obtained by approximating the side of the own vehicle by a straight line or a quadric curve having a small curvature. When the side of the own vehicle is approximated by a straight line, the inclination angle $\theta$ may be obtained based on the direction of the straight line. When the side of the vehicle is approximated by a quadric curve, the inclination angle $\theta$ may be obtained based on a direction orthogonal to the central axis of the quadric curve. Also, the side of the own vehicle may be approximated by any curve other than a quadric curve as long as the central axis can be obtained or by any other shape.

Next, based on the configuration described above, exemplary steering assist control performed by the parking assist ECU 12A of this embodiment is described.

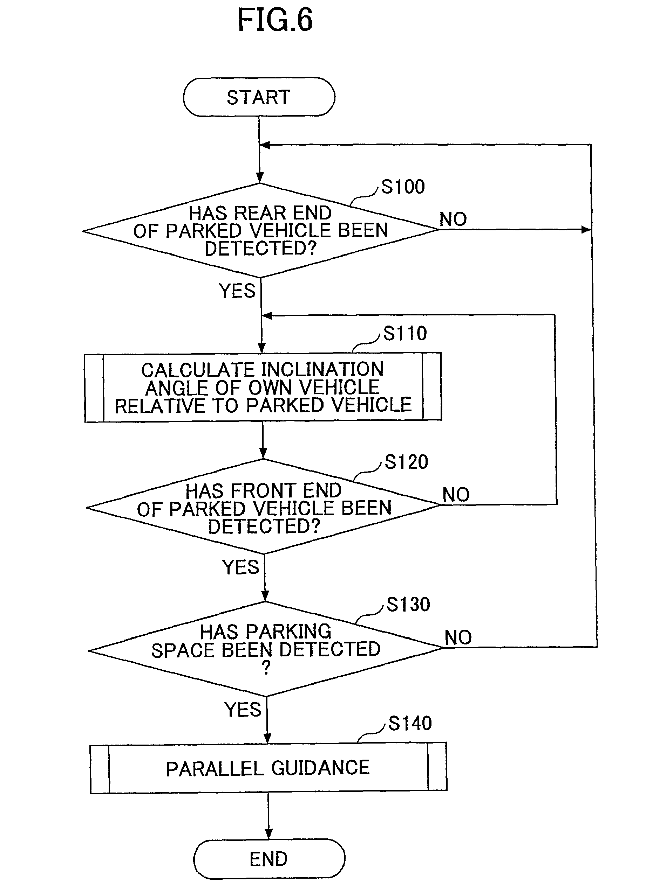

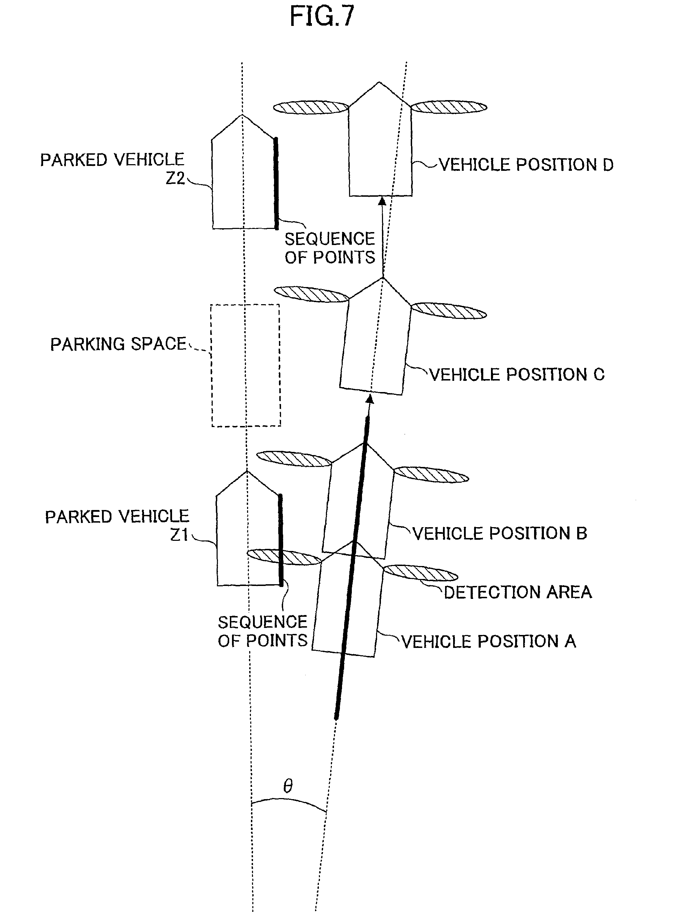

FIG. 6 is a flowchart showing exemplary steering assist control performed by the parking assist ECU 12A. FIG. 7 is a drawing illustrating the steering assist control shown in FIG. 6. The process shown in FIG. 6 may be started when the parking switch 52 is turned on and the parallel parking mode is selected.

In step 100 shown in FIG. 6, the information output control unit 42A determines whether the rear end of a parked vehicle has been detected based on a detection result from the parking space detecting unit 41. For example, the information output control unit 42A determines that the rear end of the parked vehicle has been detected when the temporary flag described above is set by the parking space detecting unit 41. In the example shown in FIG. 7, the rear end of the parked vehicle Z1 is detected when the own vehicle is in a vehicle position A. If the rear end of the parked vehicle has been detected, the process proceeds to step 110. Otherwise, the process returns to step 100 without performing subsequent steps.

In step 110, the information output control unit 42A requests the inclination calculation unit 46A to calculate the inclination angle $\theta$ with respect to the detected parked vehicle. When requested, the inclination calculation unit 46A calculates the inclination angle $\theta$ as described above based on a detection result (a sequence of points indicating distances from the side of the parked vehicle) from the distance-measuring sensor 70.

In step 120, the information output control unit 42A determines whether the front end of the parked vehicle has been detected based on a detection result from the parking space detecting unit 41. For example, the information output control unit 42A determines that the front end of the parked vehicle has been detected when the completion flag described above is set by the parking space detecting unit 41. In the example shown in FIG. 7, the front end of the parked vehicle Z1 is detected when the own vehicle is in a vehicle position B. If the front end of the parked vehicle has been detected, the process proceeds to step 130. Otherwise, the process returns to step 110. Thus, the inclination calculation unit 46A repeats calculation of the inclination angle $\theta$ based on detection results continuously sent from the distance-measuring sensor 70 after the rear end of the parked vehicle is detected and until the front end of the parked vehicle is detected. Alternatively, the inclination calculation unit 46A may be configured to calculate the inclination angle $\theta$ when the front end of the parked vehicle is detected based on detection results obtained by the distance-measuring sensor 70 during the time between the detection of the rear end and the detection of the front end of the parked vehicle.

In step 130, the information output control unit 42A determines whether a parking space has been detected based on a detection result from the parking space detecting unit 41. For example, the information output control unit 42A determines that a parking space has been detected when the parking space detection flag described above is set by the parking space detecting unit 41. In the example shown in FIG. 7, a parking space is detected when the own vehicle is in a vehicle position C. If a parking space has been detected, the process proceeds to step 140. Otherwise, the information output control unit 42A determines that no parking space is available in front of the detected parked vehicle, and the process returns to step 100. In step 100 following step 130, detection of the rear end of another parked vehicle is determined.

In step 140, the information output control unit 42A performs "parallel guidance", i.e., steering assistance based on the inclination angle $\theta$ calculated in step 110. The parallel guidance includes guiding the own vehicle so that the inclination angle $\theta$ becomes zero, i.e., so that the vehicle is oriented parallel to a straight line approximating the side of the parked vehicle. The information output control unit 42A totals deflection angles calculated by the deflection angle calculation unit 43 during the time after the inclination angle $\theta$ is calculated, and guides the own vehicle such that the sum of the total of the deflection angles and the inclination angle $\theta$ calculated in step 110 becomes substantially zero.

In the steering assistance, for example, the information output control unit 42A simply outputs a sound (e.g., "pop") indicating the detection of a parking space (in the example shown in FIG. 7, the parking space in front of the parked vehicle Z1) from a speaker 24 (see FIG. 1), and also outputs a message like "To park in a parking space to the side of your vehicle, adjust the orientation of your vehicle until it becomes parallel to the orientation of a parked vehicle behind the parking space" from the speaker 24. The information output control unit 42A may be configured to output a similar message on a display 22 (see FIG. 1) instead of or in addition to the voice guidance described above.

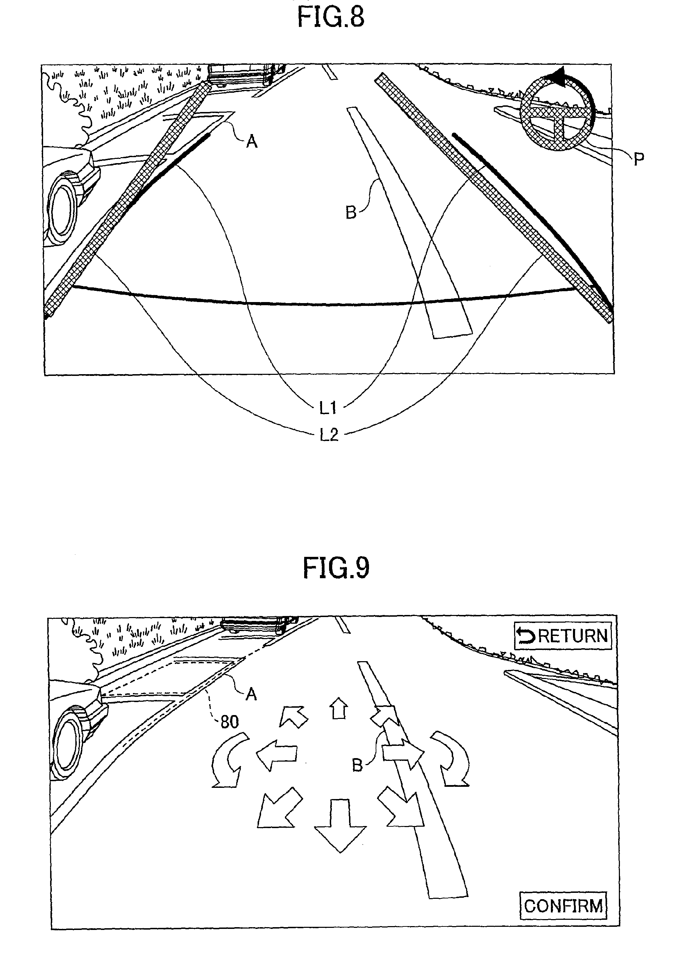

FIG. 8 is a drawing illustrating a more user-friendly example of parallel guidance. As shown in FIG. 8, the information output control unit 42A displays a video image (real-time image) being taken by a back monitor camera 20 for monitoring an area within an angular range behind the vehicle on the display 22 provided in the cabin of the vehicle. The information output control unit 42A, as shown in FIG. 8, superimposes reference lines L1 extending parallel to the straight line approximating the side of a parked vehicle and lines L2 indicating the current orientation of the own vehicle on the video image being taken by the back monitor camera 20. With this user interface, the driver can easily steer the vehicle such that the lines L2 coincide with the corresponding reference lines L1. In addition, as shown in FIG. 8, the information output control unit 42A superimposes a navigation icon P on the video image which navigation icon P graphically indicates a steering direction to make the lines L2 coincide with the reference lines L1. The navigation icon P enables the driver to intuitively understand the direction to turn the steering wheel. The information output control unit 42A may also be configured to superimpose other information on the video image such as the amount of steering necessary to make the lines L2 coincide with the reference lines L1.

When the vehicle reaches the parking start position determined by the parking start position calculation unit 44, the information output control unit 42A outputs a corresponding voice and/or on-screen message, and terminates the steering assistance. In the example shown in FIG. 7, the information output control unit 42A terminates the steering assistance when the own vehicle reaches a vehicle position D. The information output control unit 42A may be configured to determine whether the own vehicle is oriented parallel to the side of the parked vehicle when the own vehicle reaches the parking start position. The orientation of the own vehicle may be determined based on the deflection angle (the total of the deflection angles obtained during the steering assistance) calculated by the deflection angle calculation unit 43. For example, the information output control unit 42A may be configured to determine that the own vehicle is oriented parallel to the side of the parked vehicle if the sum of the inclination angle $\theta$ and the total of the deflection angles $\alpha$ obtained during the steering assistance becomes substantially zero. Alternatively, the information output control unit 42A may be configured to determine whether the own vehicle is oriented parallel to the side of the parked vehicle based on an inclination angle between another parked vehicle in front of the parking space and the own vehicle. As exemplified in FIG. 7, the information output control unit 42A may determine whether the own vehicle is oriented parallel to the side of the parked vehicle Z1 based on an inclination angle between the parked vehicle Z2 and the own vehicle calculated by the inclination angle calculation unit 46A. In this case, it is assumed that the sides of the parked vehicles Z1 and Z2 are parallel to each other.

Next, parking assistance during the backward movement from the parking start position to the parking space is described with reference to FIGs. 9 and 1.

When the reverse shift switch 50 is turned on in the parking start position, the information output control unit 42A of the parking assist ECU 12A displays a video image (real-time image) being taken by the back monitor camera 20 for monitoring an area within an angular range behind the vehicle on the display 22 provided in the cabin of the vehicle. As shown in FIG. 9 (a screen for parallel parking), a target parking frame 80 is superimposed on the video image displayed on the display 22. The target parking frame 80 may have any shape or appearance as long as it allows the user to recognize the position and orientation of a parking space. For example, the target parking frame 80 may simulate an actual parking frame or the outer shape of a vehicle.

The initial position of the target parking frame 80 to be displayed on the display 22 is determined based on the positional relationship between the parking space and the parking start position. The initial orientation of the target parking frame 80 is, for example, determined based on the assumption that the inclination angle $\theta$ is zero, i.e., that the own vehicle in the parking start position is oriented parallel to the side of the parked vehicle. In this case, the initial orientation of the target parking frame 80 is made parallel to the side of the parked vehicle. The determined position and orientation (i.e., target parking position and target parking orientation) of the target parking frame 80 may be fixed without change by the user using a confirmation switch. Alternatively, as shown in FIG. 9, the user may be allowed to adjust the position and orientation of the target parking frame 80 before operating the confirmation switch by using, for example, touch switches for rotating the target parking frame 80 and for moving the target parking frame 80 from side to side and up and down.

When the position and orientation of the target parking frame 80 are fixed, the target movement path calculation unit 48 of the parking assist ECU 12A calculates a target movement path. When the backward movement of the vehicle is started, during the parking guidance, the information output control unit 42A of the parking assist ECU 12A estimates a vehicle position of the own vehicle based on a moving distance calculated based on the output signal from the speed sensor 18 and a steering angle obtained from the steering angle sensor 16, calculates a target steering angle corresponding to the deviation of the estimated vehicle position from the target movement path, and sends the target steering angle to a steering control ECU 30. The steering control ECU 30 controls a motor 32 to achieve the target steering angle. The motor 32 is, for example, provided in the steering column or the steering gear box to rotate the steering shaft by a rotational angle.

The target movement path calculation unit 48 may instead be configured to estimate a vehicle position during the parking assistance based on output signals from the steering angle sensor 16 and the speed sensor 18, to calculate a current target movement path based on the deviation of the estimated vehicle position from the previous target movement path, and to determine a target steering angle at the estimated vehicle position based on the current target movement path. The target movement path may be calculated each time the vehicle moves a predetermined distance (e.g., 0.5 m).

The information output control unit 42A of the parking assist ECU 12A requests the driver to stop the vehicle (or automatically stops the vehicle by an automatic braking unit) when the vehicle is finally placed in the target parking position in the parking space with the target parking orientation, and the parking assist control is terminated.

The first embodiment, for example, provides advantageous effects as described below.

The first embodiment makes it possible to guide a vehicle to a parking start position such that the vehicle becomes parallel to the side of a parked vehicle, and to determine a target parking position (including a target parking orientation) based on the assumption that the vehicle in the parking start position is oriented parallel to the side of the parked vehicle. This feature in turn makes it possible to simplify a logic program for estimating a target parking position and also to improve the accuracy in estimating the target parking position.

The first embodiment may be modified as described below.

In the first embodiment, steering assistance is provided as a voice and/or on-screen message. Instead, steering assistance may be provided by the steering control ECU 30 as an intervention in the steering operation. In this case, the information output control unit 42A calculates a target steering angle necessary to cause the own vehicle in the parking start position to become parallel to the side of a parked vehicle and sends the target steering angle to the steering control ECU 30. Then, the steering control ECU 30 controls the motor 32 to achieve the target steering angle.

<SECOND EMBODIMENT>

The second embodiment is different from the first embodiment in that the inclination angle used in steering assistance is calculated based on a parking lot line or a road dividing line detected by image recognition as well as the detection result (a sequence of points indicating distances from the side of a parked vehicle) from the distance-measuring sensor 70. Below, configurations that are unique to the second embodiment are mainly discussed. Other configurations may be substantially the same as those of the first embodiment. The same reference numbers are used for components corresponding to those in the first embodiment, and descriptions of those components are omitted.

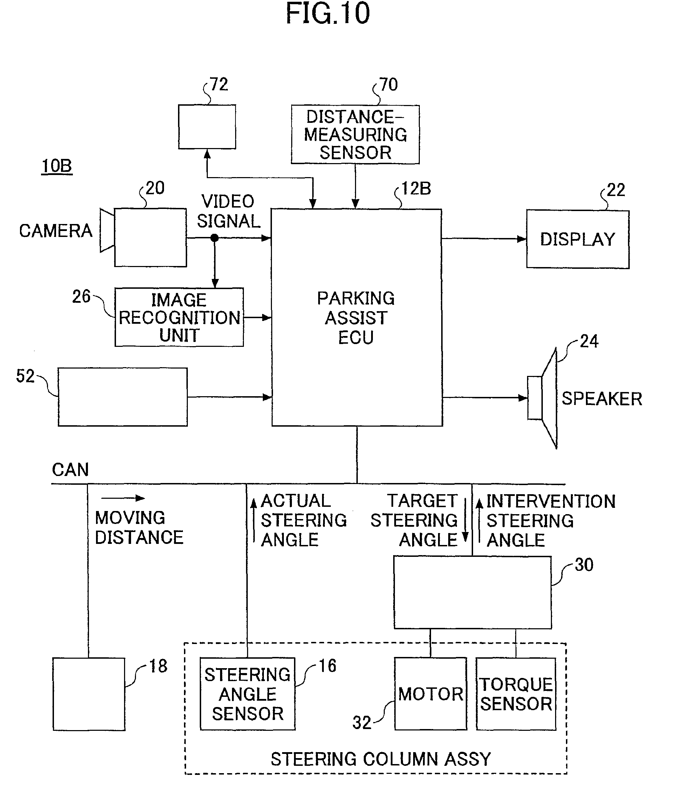

FIG. 10 is a block diagram illustrating a configuration of a parking assist device 10B according to the second embodiment of the present invention. The hardware configuration of the parking assist device 10B is different from that of the parking assist device 10A of the first embodiment shown in FIG. 1 in that an image recognition unit 26 is added.

The image recognition unit 26 processes a video image taken by the back monitor camera 20 and thereby recognizes a white line near a parking space. The white line can be either a line A constituting an entry side of a parking lot line or a road dividing line B (in this example, a centerline) as shown in FIG. 8.

An exemplary image recognition process for detecting a parking lot line is described below. In this exemplary process, feature points in an area of interest in a video image are first extracted. The feature points are identified as luminance change points the luminance of which is higher than a predetermined threshold (in other words, an edge indicating an acute change in luminance of the video image is detected). Next, coordinates of pixels are converted from the camera coordinate system into the real coordinate system by distortion correction. Then, linear approximation is performed on the edge (a sequence of feature points) and a line is thereby obtained from the feature points. If an angle (inclination angle) of the obtained line with respect to the longitudinal axis of the own vehicle is equal to or smaller than a predetermined angle (acute angle), the line is identified as a parking lot line (e.g., a white line).

When such a white line is detected, the image recognition device 26 sends information indicating the orientation of the white line (or the angle of the white line relative to the own vehicle) to an inclination calculation unit 46B.

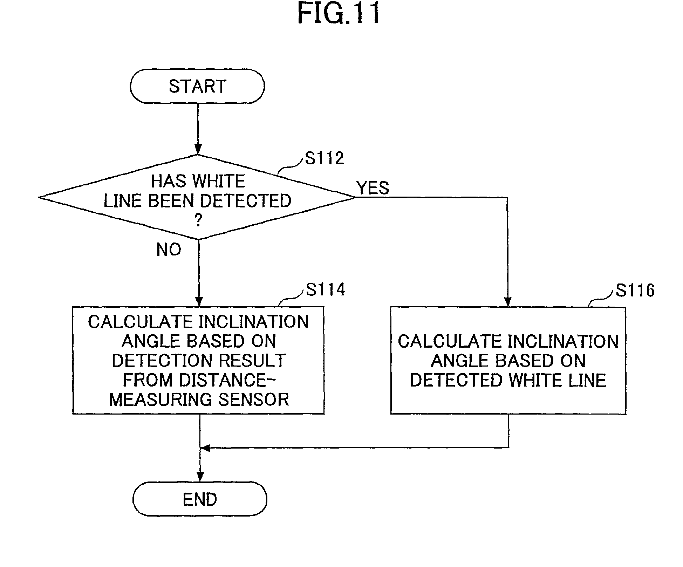

FIG. 11 is a flowchart showing an inclination calculation process performed by the inclination calculation unit 46B according to the second embodiment. The process shown in FIG. 11 may be performed in step 110 shown in FIG. 6.

In step 112, the inclination calculation unit 46B determines whether a white line near a parking space has been successfully detected based on the result of a white line detection process from the image recognition unit 26. Detection of a parking lot line may fail, for example, because of the relationship between the field of view of the back monitor camera 20 and the actual position of the parking lot line, because of surrounding light (which influences detection of an edge) at night or in an underground parking lot, or when the parking lot line itself does not exist. If a white line is successfully detected in step 112, the process proceeds to step 114. If no white line is detected, the process proceeds to step 116. Step 112 may be performed when the completion flag described above is set by the parking space detecting unit 41.

In step 114, the inclination calculation unit 46B calculates the inclination angle θ based on a detection result from the distance-measuring sensor 70 as in the first embodiment.

In step 116, the inclination calculation unit 46B calculates the inclination angle θ based on the white line detected by the image recognition unit 26. In this case, the inclination angle θ may be obtained by calculating the angle between the white line on the video image and the longitudinal axis of the own vehicle.

The calculated inclination angle θ , as in the first embodiment, is used by an information output control unit 42B to perform steering assistance and to determine the initial orientation of the target parking frame.

The second embodiment, for example, provides advantageous effects as described below.

The second embodiment makes it possible to guide a vehicle to a parking start position such that the vehicle becomes parallel to the side of a parked vehicle, and to determine a target parking position (including a target parking orientation) based on the assumption that the vehicle in the parking start position is oriented parallel to the side of the parked vehicle. This feature in turn makes it possible to simplify a logic program for estimating a target parking position and also to improve the accuracy in estimating the target parking position.

Also, according to the second embodiment, the inclination angle θ obtained based on a white line detected by the image recognition unit 26 is preferably used over the inclination angle θ obtained based on the detection result from the distance-measuring sensor 70. This feature makes it possible to accurately determine the target parking position (including the target parking orientation) based on a parking lot line even when the parked vehicle is in a tilted position within the parking lot line.

According to the second embodiment, if a parking lot line is detected by the image recognition unit 26, the initial position (i.e., the target parking position) as well as the initial orientation of the target parking frame may be determined based on the parking lot line.

The present invention is not limited to the specifically disclosed embodiments, and variations and modifications may be made without departing from the scope of the present invention.

For example, in step 110 of the above embodiments, although the inclination angle 8 is calculated based on the orientation of an own vehicle with respect to the side of a parked vehicle at the time when the completion flag is set, the inclination angle θ may be calculated when the own vehicle is in any other appropriate position. In any case, once the inclination angle θ is calculated, the change in the orientation of the own vehicle (the change in the inclination angle θ) can be calculated by adding up the deflection angles α thereafter.

In the above embodiments, parking assistance applications are executed when the parking switch 52 is turned on. Alternatively, the parking assistance applications may be executed even when the parking switch 52 is off, for example, if the speed of the vehicle becomes lower than a predetermined value or if it is determined that the vehicle is in a parking lot based on the map data of a navigation device. In this case, the parking switch 52 may be omitted.

In the above embodiments, the distance-measuring sensor 70 is used to detect the side of a parked vehicle. Alternatively, the side of a parked vehicle (and eventually the inclination angle θ ) may be detected by image recognition using a camera.

The present application claims priority from Japanese Patent Application No. 2006-334942 filed on December 12, 2006, the entire contents of which are hereby incorporated herein by reference.

## Claims

1. A parking assist device for assisting a driver to parallel-park an own vehicle in a parking space adjacent to a parked vehicle, comprising:

    an inclination angle calculation unit configured to calculate an inclination angle of a moving direction of the own vehicle with respect to a side of the parked vehicle; and
    a steering assist unit configured to perform steering assistance such that the inclination angle calculated by the inclination angle calculation unit becomes zero.

2. The parking assist device as claimed in claim 1, wherein the inclination angle calculation unit is configured to calculate the inclination angle with respect to the parked vehicle that is located behind the parking space in the moving direction of the own vehicle.

3. The parking assist device as claimed in claim 1 or 2, wherein, if a parking lot line or a road dividing line near the parking space is detected by image recognition, the inclination angle calculation unit is configured to calculate the inclination angle of the moving direction of the own vehicle with respect to the orientation of the parking lot line or the road dividing line.

4. The parking assist device as claimed in claim 3, wherein, if neither the parking lot line nor the road dividing line near the parking space is detected by image recognition, the inclination angle calculation unit is configured to calculate the inclination angle based on an output from a distance-measuring sensor for detecting a distance between the side of the parked vehicle and the own vehicle.

5. The parking assist device as claimed in claim 1, further comprising:

    a deflection angle calculation unit configured to calculate an amount of change in the orientation of the own vehicle;
    wherein the steering assist unit is configured to total deflection angles that are calculated by the deflection angle calculation unit after the inclination angle is calculated by the inclination angle calculation unit and to perform the steering assistance such that the sum of the totaled deflection angles and the inclination angle becomes substantially zero.

6.  The parking assist device as claimed in claim 5, wherein the deflection angle calculation unit is configured to calculate the amount of change in the orientation of the own vehicle in a specified section based on output signals from a steering angle sensor and a speed sensor.

7.  The parking assist device as claimed in claim 1, further comprising:

    a display unit configured to display a video image of a road surface behind the own vehicle;
    wherein the steering assist unit is configured to superimpose a reference line extending parallel to a straight line approximating the side of the parked vehicle and a line indicating a current orientation of the own vehicle on the video image to perform the steering assistance.
    8. The parking assist device as claimed in claim 1, wherein the inclination angle calculation unit is configured to calculate the inclination angle based on a result of detecting the side of the parked vehicle from the rear end to the front end by a distance-measuring sensor.

# FIG.1

10A

72

CAMERA 20  VIDEO SIGNAL

70 DISTANCE-MEASURING SENSOR

12A PARKING ASSIST ECU

22 DISPLAY

24 SPEAKER

52

CAN

MOVING DISTANCE

ACTUAL STEERING ANGLE

TARGET STEERING ANGLE

INTERVENTION STEERING ANGLE

30 STEERING CONTROL ECU

18

STEERING ANGLE SENSOR 16

32 MOTOR

TORQUE SENSOR

STEERING COLUMN ASSY

# FIG.2

EP 2 055 536 A1

DETECTION AREA

PARKED
VEHICLE Z

OWN VEHICLE

MOVING DIRECTION

# FIG.3

MOVING
DIRECTION

# FIG.4

12A

- 43 DEFLECTION ANGLE CALCULATION UNIT
- 42 INFORMATION OUTPUT CONTROL UNIT
- 44 PARKING START POSITION CALCULATION UNIT
- 46 INCLINATION CALCULATION UNIT
- 48 TARGET MOVEMENT PATH CALCULATION UNIT
- 41 PARKING SPACE DETECTING UNIT

# FIG.5

Z2

SIDE

PARKING
SPACE

Z1

SIDE

MOVING DIRECTION

DIRECTION PARALLEL
TO SIDE OF
PARKED VEHICLE

$\theta$

VEHICLE (OWN VEHICLE)

# FIG.6

```
           ┌─────────────┐
           │    START    │
           └─────────────┘
                  │
                  ▼
              ╱─────────╲   S100
         ╱──────────────────╲      NO
        ╱   HAS REAR END       ╲──────────►
        ╲ OF PARKED VEHICLE BEEN╱
         ╲      DETECTED?      ╱
              ╲─────────╱
                  │ YES
                  ▼
        ┌──────────────────────┐   S110
        │ CALCULATE INCLINATION │
        │  ANGLE OF OWN VEHICLE │
        │ RELATIVE TO PARKED VEHICLE│
        └──────────────────────┘
                  │
                  ▼
              ╱─────────╲   S120
         ╱──────────────────╲      NO
        ╱  HAS FRONT END       ╲──────────►
        ╲ OF PARKED VEHICLE BEEN╱
         ╲      DETECTED?      ╱
              ╲─────────╱
                  │ YES
                  ▼
              ╱─────────╲   S130
         ╱──────────────────╲      NO
        ╱   HAS PARKING        ╲──────────►
        ╲ SPACE BEEN DETECTED  ╱
         ╲         ?          ╱
              ╲─────────╱
                  │ YES
                  ▼
        ┌──────────────────────┐   S140
        │   PARALLEL GUIDANCE   │
        └──────────────────────┘
                  │
                  ▼
           ┌─────────────┐
           │     END     │
           └─────────────┘
```

# FIG.7

PARKED VEHICLE
Z2

VEHICLE POSITION D

SEQUENCE
OF POINTS

PARKING SPACE

VEHICLE POSITION C

PARKED VEHICLE
Z1

VEHICLE POSITION B

DETECTION AREA

SEQUENCE
OF POINTS

VEHICLE POSITION A

$\theta$

## FIG.8

## FIG.9

# FIG.10

CAMERA

VIDEO SIGNAL

IMAGE RECOGNITION UNIT

DISTANCE-MEASURING SENSOR

PARKING ASSIST ECU

DISPLAY

SPEAKER

CAN

MOVING DISTANCE

ACTUAL STEERING ANGLE

TARGET STEERING ANGLE

INTERVENTION STEERING ANGLE

STEERING ANGLE SENSOR

MOTOR

TORQUE SENSOR

STEERING COLUMN ASSY

# FIG.11

START

S112

HAS WHITE
LINE BEEN DETECTED
?

YES

NO

S114

CALCULATE INCLINATION
ANGLE BASED ON
DETECTION RESULT
FROM DISTANCE-
MEASURING SENSOR

S116

CALCULATE INCLINATION
ANGLE BASED ON
DETECTED WHITE LINE

END

<table>
<tr><td colspan="2" align="center">**INTERNATIONAL SEARCH REPORT**</td><td>International application No.<br>PCT/JP2007/072968</td></tr>
</table>

| A. CLASSIFICATION OF SUBJECT MATTER |
|---|
| *B60R21/00*(2006.01)i, *B62D1/04*(2006.01)i, *G08G1/16*(2006.01)i |
| According to International Patent Classification (IPC) or to both national classification and IPC |

**B. FIELDS SEARCHED**

Minimum documentation searched (classification system followed by classification symbols)
B60R21/00, B62D1/04, G08G1/16

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho  1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-072019 A  (Toyota Motor Corp.),<br>07 March, 2000 (07.03.00),<br>Par. Nos. [0012] to [0047]; Figs. 1 to 37<br>(Family: none) | 1-8 |
| A | JP 2003-137051 A  (Toyota Motor Corp.),<br>14 May, 2003 (14.05.03),<br>Par. Nos. [0036] to [0090]; Figs. 5 to 15<br>& US 2003/0080877 A1    & EP 001308346 A2 | 1-8 |
| A | JP 2006-193011 A  (Toyota Motor Corp.),<br>27 July, 2006 (27.07.06),<br>Par. Nos. [0011] to [0042]; Figs. 1 to 6<br>(Family: none) | 1-8 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    28 December, 2007 (28.12.07) | Date of mailing of the international search report<br>    15 January, 2008 (15.01.08) |
|---|---|
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2007/072968

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2006-027504 A  (Toyota Motor Corp.),<br>02 February, 2006 (02.02.06),<br>Par. Nos. [0011] to [0041]; Figs. 1 to 5<br>(Family: none) | 1-8 |
| A | JP 2005-014738 A  (Toyota Motor Corp.),<br>20 January, 2005 (20.01.05),<br>Par. Nos. [0011] to [0038]; Figs. 1 to 5<br>(Family: none) | 1-3,5,6 |
| A | JP 2006-193014 A  (Toyota Motor Corp.),<br>27 July, 2006 (27.07.06),<br>Par. Nos. [0012] to [0052]; Figs. 1 to 9<br>& EP 001683707 A1 | 1 |

Form PCT/ISA/210 (continuation of second sheet) (April 2007)

## REFERENCES CITED IN THE DESCRIPTION

**Patent documents cited in the description**

- JP 2003081042 A
- JP 2006334942 A